# FASCICULE DE BREVET EUROPEEN

(11) **EP 1 680 584 B1**
(45) Date de publication et mention de la délivrance du brevet: **31.12.2008**
(21) Numéro de dépôt: 04818442.8
(22) Date de dépôt: 12.10.2004
(51) Int. Cl.: F02D 41/02, F02D 41/40

(54) **SYSTEME D'AIDE A LA REGENERATION DE MOYENS DE DEPOLLUTION INTEGRES DANS UNE LIGNE D'ECHAPPEMENT D' UN VEHICULE**
SYSTEM ZUR UNTERSTÜTZUNG DER REGENERATION VON IN EINER FAHRZEUGABGASLEITUNG INTEGRIERTEN ENTGIFTUNGSMITTELN
SYSTEM FOR ASSISTING IN THE REGENERATION OF DEPOLLUTION MEANS INTEGRATED INTO A VEHICLE EXHAUST LINE

(30) Priorité: 07.11.2003 FR 0313159
(43) Date de publication de la demande: 19.07.2006
(73) Titulaire: Peugeot Citroën Automobiles S.A., 78140 Vélizy Villacoublay (FR)
(72) Inventeur: COLIGNON, Christophe, F-92300 Levallois Perret (FR)
(74) Mandataire: Ménès, Catherine
(86) Numéro de dépôt international: PCT/FR2004/002588
(87) Numéro de publication internationale: WO 2005/047676

(56) Documents cités:
- EP-A- 1 130 227
- EP-A- 1 174 612
- EP-A- 1 281 852
- DE-A- 10 033 159
- DE-A- 10 056 016
- US-B1- 6 508 057
- US-B2- 6 594 990

## Description

La présente invention concerne un système d'aide à la régénération de moyens de dépollution associés à des moyens formant catalyseur d'oxydation, intégrés dans une ligne d'échappement d'un moteur Diesel de véhicule automobile.

Plus particulièrement, l'invention se rapporte à de tels moteurs associés à des moyens à rampe commune d'alimentation en carburant de cylindres de celui-ci, adaptés,pour mettre en oeuvre une stratégie à iso-couple de régénération par injection de carburant dans les cylindres du moteur selon au moins une post-injection.

Il est en effet connu dans l'état de la technique comme EP1281852, d'assurer la régénération de moyens de dépollution en utilisant une ou plusieurs post-injections de carburant dans les cylindres du moteur, c'est-à-dire des injections de carburant pendant la phase de détente de ceux-ci.

Cependant, lors de la régénération de moyens de dépollution comprenant par exemple un filtre à particules, les phases de lever de pied de l'accélérateur du véhicule, au cours desquelles il n'y a pas d'injection de carburant en fonctionnement normal et de ralenti, au cours desquelles la température des gaz d'échappement est très faible, sont problématiques car elles font chuter la température de la ligne d'échappement et des différents moyens intégrés dans celle-ci.

L'utilisation d'une ou de plusieurs post-injections lors de ces phases de vie du moteur permet alors de limiter la chute de température de cette ligne d'échappement en se basant sur la conversion catalytique des HC produits par la combustion de cette ou ces post-injections dans le moteur.

L'inconvénient de ces stratégies est qu'elles reposent sur l'exotherme produit par les moyens formant catalyseur d'oxydation, ces moyens étant formés par un catalyseur d'oxydation ou un piège à NOx avec une fonction d'oxydation CO/HC par exemple, ces moyens formant catalyseur étant alors considérés comme activés.

Lors des phases de retour au ralenti, il n'y a pas d'injection principale ni d'injection pilote de sorte que la ou les post-injections ne brûlent pas dans le cylindre. Celles-ci ne font alors que vaporiser du carburant sous forme d'HC qui sont convertis par les moyens formant catalyseur. La température en entrée des moyens formant catalyseur d'oxydation est alors très faible et malgré l'exotherme catalytique produit par la combustion des HC issus de la ou de ces post-injections, la face avant des moyens formant catalyseur refroidit progressivement et son activité de conversion se désamorce progressivement. Lors d'une phase de retour au ralenti prolongée du moteur, il se peut alors que les moyens formant catalyseur ne soient pas suffisamment actifs pour convertir tous les HC, ce qui se traduit par des pics d'HC en aval des moyens formant catalyseur, voire des fumées bleues et/ou des odeurs à l'échappement.

Le but de l'invention est donc de résoudre ces problèmes.

A cet effet l'invention a pour objet un système d'aide à la régénération de moyens de dépollution associés à des moyens formant catalyseur d'oxydation, intégrés dans une ligne d'échappement d'un moteur Diesel de véhicule automobile et dans lequel le moteur est associé à des moyens à rampe commune d'alimentation en carburant de cylindres de celui-ci, adaptés pour mettre en oeuvre une stratégie à iso-couple de régénération par injection de carburant dans les cylindres du moteur, selon au moins une post-injection, caractérisé en ce qu'il comporte des moyens de détection d'une phase de lever de pied de l'accélérateur du véhicule ou de ralenti du moteur de celui-ci et des moyens d'analyse de l'état d'amorçage des moyens formant catalyseur, pour piloter les moyens à rampe commune d'alimentation en carburant afin de réguler la quantité de carburant injecté lors de la ou de chaque post-injection, en fonction de l'état d'amorçage des moyens formant catalyseur ;
en ce que les moyens d'analyse de l'état d'amorçage des moyens formant catalyseur sont reliés à des capteurs de température en amont et en aval de ceux-ci, pour déterminer un point de fonctionnement de ces moyens formant catalyseur et comprennent des moyens de détermination à partir de ce point de fonctionnement, de l'état d'amorçage de ceux-ci ;
en ce que les moyens de détermination de l'état d'amorçage des moyens formant catalyseur sont adaptés pour comparer le point de fonctionnement de ces moyens à deux courbes de transition d'état d'amorçage prédéterminées définissant des plages d'état non-amorcé, amorcé et amorcé-sans risque de désamorçage des moyens formant catalyseur et pour valider un état au terme d'une première période de temps prédéterminée de confirmation des moyens formant catalyseur dans cet état ;et
en ce que lorsque les moyens formant catalyseur sont dans un état amorcé-sans risque de désamorçage, les moyens à rampe commune sont adaptés pour injecter une quantité nominale de carburant lors de la ou chaque post-injection, lorsque les moyens formant catalyseur sont dans un état amorcé, les moyens à rampe commune sont adaptés pour réduire la quantité de carburant injecté lors de la ou de chaque post-injection selon un facteur multiplicatif, fonction de l'écart entre le point de fonctionnement de ces moyens formant catalyseur et la courbe correspondante de transition entre un état amorcé et un état non-amorcé et lorsque les moyens formant catalyseur sont dans un état non-amorcé, les moyens à rampe commune sont adaptés pour limiter la quantité de carburant injecté lors de la ou de chaque post-injection à une valeur minimale prédéterminée.

Selon d'autres caractéristiques :
- des écarts d'hystérésis différents sont utilisés selon le sens des transitions d'un état vers un autre des moyens formant catalyseur, pour confirmer l'état ;
- les moyens de détermination sont adaptés pour maintenir une information d'état non-amorcé des moyens formant catalyseur, pendant une seconde période de temps prédéterminée, après que le point de fonctionnement de ceux-ci a franchi la courbe de transition correspondante non-amorcé-amorcé ;
- les périodes de temps et les écarts d'hystérésis sont calibrables ;
- la valeur minimale est égale à 0 ;
- les moyens d'alimentation à rampe commune sont adaptés pour déclencher plusieurs post-injections de carburant et la quantité de carburant injecté lors de chaque post-injection lorsque les moyens formant catalyseur sont dans un état amorcé, est régulée indépendamment de celle de l'autre post-injection ;
- le moteur est associé à un turbocompresseur ;
- les moyens de dépollution comprennent un filtre à particules ;
- les moyens de dépollution comprennent un piège à NOx ;
- le carburant comporte un additif destiné à se déposer avec les particules auxquelles il est mélangé, sur les moyens de dépollution pour faciliter leur régénération ; et
- le carburant comporte un additif formant piège à NOx.

L'invention sera mieux comprise à la lecture de la description qui va suivre, donnée uniquement à titre d'exemple et faite en se référant aux dessins annexés sur lesquels :
- la figure 1 représente un schéma synoptique illustrant la structure générale d'un système d'aide à la régénération selon l'invention ;
- la figure 2 illustre des -courbes utilisées dans un système selon l'invention pour déterminer l'état d'amorçage de moyens formant catalyseur d'oxydation intégrés dans un système selon l'invention ;
- la figure 3 illustre un exemple de réalisation de moyens de régulation entrant dans la constitution d'un système selon l'invention ; et
- la figure 4 illustre le fonctionnement de ces moyens.

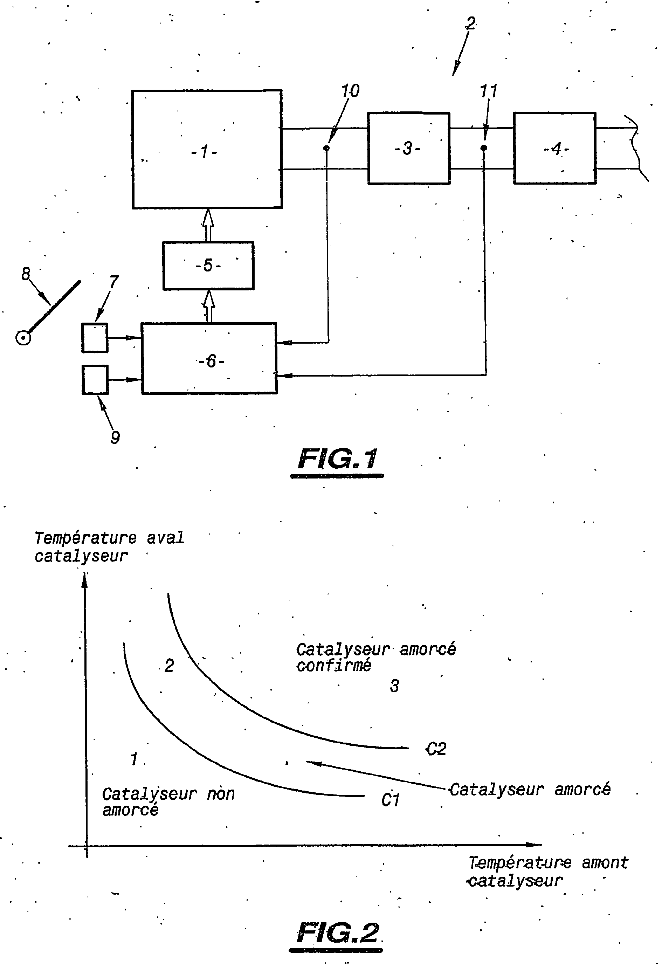

On a en effet illustré sur la figure 1, un système d'aide à la régénération de moyens de dépollution intégrés dans une ligne d'échappement d'un moteur de véhicule.

Sur cette figure, le moteur est désigné par la référence générale 1, ce moteur étant un moteur Diesel de véhicule automobile et étant associé à une ligne d'échappement désignée par la référence générale 2, dans laquelle sont intégrés des moyens formant catalyseur d'oxydation désignés par la référence générale 3 et des moyens de dépollution désignés par la référence générale 4 comprenant par exemple un filtre à particules.

Les moyens formant catalyseur d'oxydation sont placés par exemple en amont des moyens de dépollution.

Le moteur est également associé à des moyens à rampe commune d'alimentation en carburant de cylindres de celui-ci, désignés par la référence générale 5 et adaptés pour mettre en oeuvre une stratégie à iso-couple de régénération par injection de carburant dans les cylindres du moteur, selon au moins une post-injection.

Le fonctionnement de ces moyens est contrôlé par une unité de traitement d'informations désignée par la référence générale 6.

Cette unité de traitement d'informations 6 est reliée à des moyens de détection d'une phase de lever de pied de l'accélérateur du véhicule ou de ralenti du moteur de celui-ci. Ainsi par exemple, l'unité de traitement d'information est raccordée à un capteur 7 de détection d'un lever de pied de l'accéléraleur 8 tandis que des moyens de détection 9 sont également associés à celle-ci pour détecter une phase de ralenti du moteur du véhicule.

Ces moyens présentent n'importe quelle structure appropriée.

L'unité de traitement d'informations 6 est également reliée à des capteurs de température respectivement 10 et 11 placés en amont et en aval des moyens formant catalyser 3.

En fait, l'unité de traitement d'informations 6 est adaptée pour piloter les moyens 5 à rampe commune d'alimentation en carburant afin de réguler la quantité de carburant injectée lors de la ou de chaque post-injection, en fonction de l'état d'amorçage des moyens formant catalyseur 3.

Cette unité comporte alors des moyens d'analyse de l'état d'amorçage des moyens formant catalyseur comprenant les deux capteurs de température 10 et 11 en amont et en aval de ceux-ci, pour permettre à l'unité 6 de déterminer un point de fonctionnement de ces moyens formant catalyseur et de déterminer à partir de ce point de fonctionnement, l'état d'amorçage de ceux-ci.

Cette détermination est alors réalisée par l'unité de traitement d'informations 6 en utilisant des courbes telles qu'illustrées sur la figure 2.

A cet effet, ces moyens sont adaptés pour comparer le point de fonctionnement tel que déterminé précédemment à partir dès températures mesurées en amont et en aval des moyens formant catalyseur, à deux courbes de transition d'état d'amorçage prédéterminé C1 et C2, définissant des plages d'état non-amorcé 1, amorcé 2 et amorcé-confirmé 3 des moyens formant-catalyseur et pour valider un état au terme d'une première période de temps prédéterminée de confirmation des moyens formant catalyseur dans cet état.

La courbe C1 est alors une courbe de transition entre un état catalyseur non-amorcé et un état catalyseur amorcé. La courbe C2 est alors une courbe de transition entre un état catalyseur amorcé et un état catalyseur amorcé-confirmé.

Des écarts d'hystérésis différents peuvent être utilisés selon le sens des transitions d'un état vers un autre des moyens formant catalyseur pour confirmer l'état.

De plus, les moyens de détermination formés par l'unité 6 sont adaptés pour maintenir une information d'état non-amorcé des moyens formant catalyseur, pendant une seconde période de temps prédéterminée après que le point de fonctionnement de ceux-ci a franchi la courbe C1 de transition correspondante non-amorcé-amorcé.

Il est à noter que ces périodes de temps et ces écarts d'hystérésis peuvent être calibrables et permettent de fiabiliser l'information relative à l'état des moyens formant catalyseur.

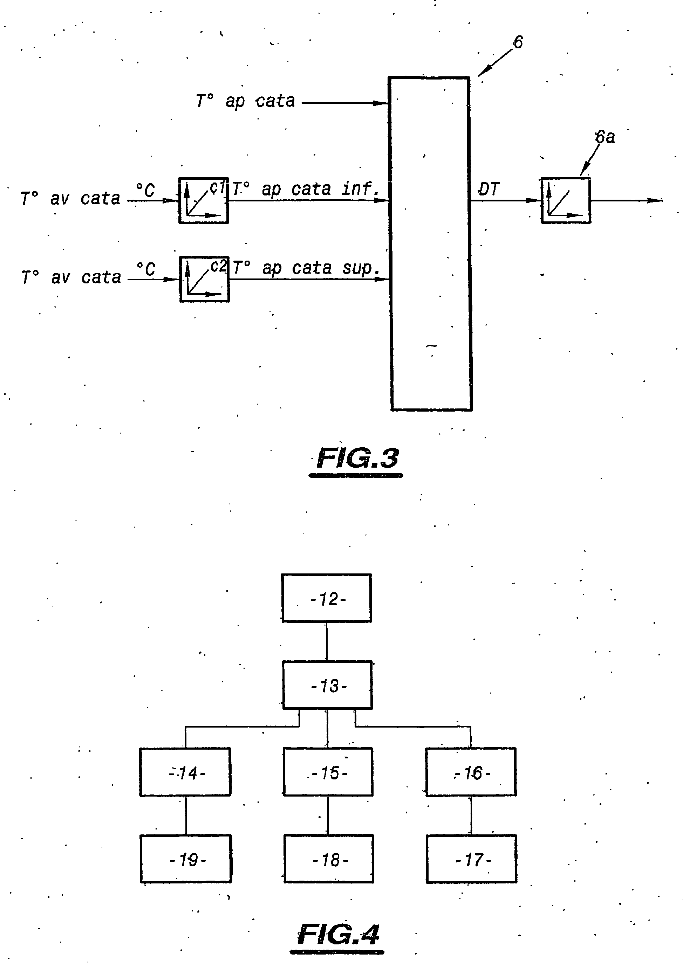

Ceci est illustré sur la figure 3, où l'on reconnaît l'unité de traitement d'informations 6 recevant en entrée les informations de température avant et après les moyens formant catalyseur et mettant en oeuvre les tourbes de transition C1 et C2 décrites précédemment. En sortie, cette unité 6 est alors adaptée pour piloter les moyens 5 à rampe commune d'alimentation afin de réguler la quantité de carburant injecté en fonction de l'état d'amorçage de ces moyens formant catalyseur par l'intermédiaire de moyens de régulation 6a, comme cela sera décrit plus en détail par la suite.

Ainsi par exemple et comme cela est illustré sur la figure 4, après la détection d'une phase de lever de pied de l'accélérateur du véhicule ou de ralenti du moteur de celui-ci telle que désignée par la référence générale 12, l'unité de traitement d'informations 6 est adaptée pour déterminer l'état d'amorçage des moyens formant catalyseur lors de l'étape 13 comme cela a été décrit précédemment.

En fonction de cette acquisition, l'unité de traitement d'informations détecte alors un état non-amorcé, amorcé ou amorcé-confirmé des moyens formant catalyseur respectivement en 14, 15 ou 16.

Lorsque les moyens formant catalyseur sont dans un état amorcé-confirmé, les moyens 5 à rampe commune sont adaptés pour injecter une quantité nominale de carburant lors de la ou de chaque post-injection en 17. Par contre, lorsque les moyens formant catalyseur sont dans un état amorcé, les moyens à rampe commune sont adaptés pour réduire la quantité de carburant injecté lors de la ou de chaque post-injection en 18 selon un facteur multiplicatif (compris entre 0 et 1) fonction de l'écart entre le point de fonctionnement de ces moyens formant catalyseur et la courbe correspondante de transition C1 entre un état amorcé et un état non-amorcé. Enfin, lorsque les moyens formant catalyseur sont dans un état non-amorcé, les moyens 5 à rampe -commune sont adaptés pour limiter en 19 la quantité de carburant injecté lors de la ou de chaque postinjection à une valeur minimale prédéterminée, cette valeur minimale prédéterminée pouvant par exemple être égale à 0.

Dans le cas où les moyens d'alimentation à rampe commune sont adaptés pour déclencher plusieurs post-injections de carburant successives de façon classique, la quantité de carburant injecté lors de chaque post-injection lorsque les moyens formant catalyseur sont dans un état amorcé, est régulée indépendamment de celle de l'autre post-injection.

Bien entendu, différentes dispositions peuvent être prévues.

C'est ainsi par exemple que le moteur peut être associé à un turbocompresseur. Les moyens de dépollution peuvent comprendre un filtre à particules, un piège à NOx, etc.

Enfin, et de façon classique, le carburant peut également comporter un additif destiné à se déposer avec les particules auxquelles il est mélangé, sur les moyens de dépollution pour faciliter leur régénération en abaissant la température de combustion des suies piégées dans celui-ci.

De façon classique, cet additif est en effet présent dans les particules après combustion du carburant additivé dans le moteur.

Un additif formant piège à NOx peut également être envisagé.

On conçoit alors que l'objectif de ce système est de déterminer si les niveaux thermiques des moyens formant catalyseur permettent de convertir les hydrocarbures imbrûlés issus de la chambre de combustion. L'état d'amorçage des moyens formant catalyseur sert à déclencher les transitions entre les différents niveaux d'aide à la régénération, c'est-à-dire les différents niveaux de post-injections. Lorsque les moyens formant catalyseur ne sont pas amorcés, la ou chaque post-injection est calibrée de telle sorte qu'elle ne produise qu'une quantité très limitée voire nulle hydrocarbures imbrûlés. Les niveaux thermiques sont néanmoins plus élevés qu'en fonctionnement normal hors régénération et permettent aux moyens formant catalyseur de s'amorcer.

Lorsque les moyens formant catalyseur d'oxydation sont amorcés, la ou chaque post-injection peut produire des HC qui sont convertis dans les moyens formant catalyseur et glénèrent un exotherme qui élève les niveaux thermiques en entrée des moyens de dépollution placés en aval de ces moyens formant catalyseur.

Ainsi, cette fonction permet de passer le moins de temps possible dans un état catalyseur non-amorcé afin que l'aide à la régénération soit la plus efficace possible.

Trois états des moyens formant catalyseur peuvent être définis :
- un état de catalyseur non-amorcé dans lequel le niveau thermique des moyens formant catalyseur est insuffisant pour convertir les hydrocarbures imbrûlés provenant de la combustion de la post-injection dans le cylindre;
- un état de catalyseur amorcé dans lequel ces moyens convertissent les hydrocarbures imbrûlés provenant de la chambre de combustion ; et
- un état de catalyseur amorcé-confirmé dans lequel les moyens formant catalyseur sont amorcés et ne présentent aucun risque de désamorçage soudain notamment lors des phases de lever de pied (lorsque seule une post-injection est appliquée sans injection pilote ni principale) et/ou de ralenti. Ceci permet d'éviter le risque d'émission de bouffées de fumée à l'échappement.

L'état d'amorçage du catalyseur est alors déterminé à partir des températures mesurées dans la ligne d'échappement en amont et en aval des moyens formant catalyseur. La transition entre états est obtenue après un temps de confirmation dans un état, c'est-à-dire que pour une température prédéterminée en amont du catalyseur, la température en aval de celui-ci est supérieurs à la valeur déterminée par la courbe de transition correspondante pendant une période de temps minimale calibrable. Le comptage du temps de sortie d'un état se fait par l'intermédiaire d'une autre période de temps calibrable. Des hystérésis calibrables sont utilisés pour différencier les fronts montants des fronts descendants pour les changements d'états. Un temps de forçage dans un niveau déterminé permet de forcer le système, avant d'autoriser le passage dans l'autre niveau par la courbe de transition.

En fait, l'objectif de ce système est de limiter les débits des post-injections dans un état de lever de pied de l'accélérateur du véhicule et/ou de ralenti, lorsque les moyens formant catalyseur s'approchent de la limite de désamorçage.

Grâce à un tel système, il est alors possible de limiter au maximum les pics d'HC et les émissions de fumées et d'odeurs lors des phases de lever de pied de l'accélérateur du véhicule et/ou de ralenti.

Ceci perme également de limiter le vieillissement thermique des moyens formant catalyseur par une limitation de l'exotherme catalytique.

Bien entendu, d'autres modes de réalisation peuvent être envisagés.

Ainsi par exemple, les moyens de dépollution et les moyens formant catalyseur d'oxydation peuvent être intégrés dans un seul et même élément, notamment sur un même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non. Cette fonction d'oxydation et/ou de piège à NOx peut être remplie par exemple par un additif mélangé au carburant.

## Revendications

1. Système d'aide à la régénération de moyens de dépollution (4) associés à des moyens formant catalyseur d'oxydation (3), intégrés dans une ligne d'échappement (2) d'un moteur Diesel (1) de véhicule automobile et dans lequel le moteur (1) est associé à des moyens (5) à rampe commune d'alimentation en carburant de cylindres de celui-ci, adaptés pour mettre en oeuvre une stratégie à iso-couple de régénération par injection de carburant dans les cylindres du moteur, selon au moins une post-injection, **caractérisé en ce qu'**il comporte des moyens (7, 8, 9) de détection d'une phase de lever de pied de l'accélérateur du véhicule et/ou de ralenti du moteur de celui-ci et des moyens (6) d'analyse de l'état d'amorçage des moyens formant catalyseur (3), pour piloter les moyens (5) à rampe commune d'alimentation en carburant afin de réguler la quantité de carburant injecté lors de la ou de chaque post-injection, en fonction de l'état d'amorçage des moyens formant catalyseur (3),
**en ce que** les moyens d'analyse (6) de l'état d'amorçage des moyens formant catalyseur (3) sont reliés à des capteurs de température (10, 11) en amont et en aval de ceux-ci, pour déterminer un point de fonctionnement de ces moyens formant catalyseur et comprennent des moyens de détermination (6) à partir de ce point de fonctionnement, de l'état d'amorçage de ceux-ci,
et **en ce que** les moyens de détermination (6) de l'état d'amorçage des moyens formant catalyseur (3) sont adaptés pour comparer le point de fonctionnement de ces moyens à deux courbes de transition d'état d'amorçage prédéterminées (C1, C2) définissant des plages d'état non-amorcé, amorcé et amorcé-sans risque de désamorçage des moyens formant catalyseur (3) et pour valider un état au terme d'une première période de temps prédéterminée de confirmation des moyens formant catalyseur dans cet état ; et
**en ce que** lorsque les moyens formant catalyseur (3) sont dans un état amorcé-sans risque de désamorçage, les moyens (5) à rampe commune sont adaptés pour injecter une quantité nominale de carburant lors de la ou chaque post-injection, lorsque les moyens formant catalyseur (3) sont dans un état amorcé, les moyens (5) à rampe commune sont adaptés pour réduire la quantité de carburant injecté lors de la ou de chaque post-injection selon un facteur multiplicatif, fonction de l'écart entre le point de fonctionnement de ces moyens formant catalyseur (3) et la courbe correspondante de transition entre un état amorcé et un état non-amorcé (C1) et lorsque les moyens formant catalyseur (3) sont dans un état non-amorcé, les moyens (5) à rampe commune sont adaptés pour limiter la quantité de carburant injecté lors de la ou de chaque post-injection à une valeur minimale prédéterminée.

2. Système selon la revendication 1, **caractérisé en ce que** des écarts d'hystérésis différents sont utilisés selon le sens des transitions d'un état vers un autre des moyens formant catalyseur (3), pour confirmer l'état.

3. Système selon la revendication 1 ou 2, **caractérisé en ce que** les moyens de détermination (6) sont adaptés pour maintenir une information d'état non-amorcé des moyens formant catalyseur (3), pendant une seconde période de temps prédéterminée, après que le point de fonctionnement de ceux-ci a franchi la courbe de transition correspondante non-amorcé-amorcé (C1).

4. Système selon la revendication 2 ou 3, **caractérisé en ce que** les périodes de temps et les écarts d'hystérésis sont calibrables.

5. Système selon l'une quelconque des revendications précédentes, **caractérisé en ce que** la valeur minimale est égale à 0.

6. Système selon l'une quelconque des revendications précédentes, **caractérisé en ce que** les moyens (5) d'alimentation à rampe commune sont adaptés pour déclencher plusieurs post-injections de carburant et **en ce que** la quantité de carburant injecté lors de chaque post-injection lorsque les moyens formant catalyseur (3) sont dans un état amorcé, est régulée indépendamment de celle de l'autre post-injection.

7. Système selon l'une quelconque des revendications précédentes, **caractérisé en ce que** le moteur est associé à un turbocompresseur.

8. Système selon l'une quelconque des revendications précédentes, **caractérisé en ce que** les moyens de dépollution (4) comprennent un filtre à particules.

9. Système selon l'une quelconque des revendications précédentes, **caractérisé en ce que** les moyens de dépollution (4) comprennent un piège à NOx.

10. Système selon l'une quelconque des revendications précédentes, **caractérisé en ce que** le carburant comporte un additif destiné à se déposer avec les particules auxquelles il est mélangé, sur les moyens de dépollution (4) pour faciliter leur régénération.

11. Système selon l'une quelconque des revendications 1 à 9, **caractérisé en ce que** le carburant comporte un additif formant piège à NOx.

## Claims

1. System for aiding the regeneration of pollution control means (4) associated with oxidation-catalyst-forming means (3), integrated into an exhaust line (2) of a diesel engine (1) of a motor vehicle and in which the engine (1) is associated with common-rail injection means (5) for feeding fuel to the cylinders thereof, suitable for implementing a regeneration strategy at constant torque by injecting fuel into the cylinders of the engine, according to at least one post-injection, **characterized in that** it comprises means (7, 8, 9) for detecting an accelerator pedal release phase of the vehicle and/or an engine idling phase of the latter and means (6) for analysing the initiation state of the catalyst-forming means (3), for driving the common-rail fuel injection means (5) in order to control the amount of fuel injected during the or each post-injection, as a function of the initiation state of the catalyst-forming means (3),
**in that** the means (6) for analysing the initiation state of the catalyst-forming means (3) are connected to temperature sensors (10, 11) upstream and downstream of the latter, in order to determine an operating point of these catalyst-forming means, and comprise means (6) for determining, starting from this operating point, the initiation state of the latter,
and **in that** the means (6) for determining the initiation state of the catalyst-forming means (3) are suitable for comparing the operating point of these means to two predetermined initiation state transition curves (C1, C2) that define ranges corresponding to the non-initiated, initiated and initiated/without risk of being uninitiated states of the catalyst-forming means (3) and in order to validate one state in terms of a first predetermined time period for confirming catalyst-forming means in this state; and
**in that** when the catalyst-forming means (3) are in an initiated/without risk of being uninitiated state, the common-rail means (5) are suitable for injecting a nominal amount of fuel during the or each post-injection, when the catalyst-forming means (3) are in an initiated state, the common-rail means (5) are suitable for reducing the amount of fuel injected during the or each post-injection by a multiple factor, depending on the difference between the operating point of these catalyst-forming means (3) and the curve corresponding to the transition between an initiated state and a non-initiated state (C1), and when the catalyst-forming means (3) are in a non-initiated state, the common-rail means (5) are suitable for limiting the amount of fuel injected during the or each post-injection to a predetermined minimum value.

2. System according to Claim 1, **characterized in that** different variations in hysteresis are used according to the direction of the transitions from one state to another of the catalyst-forming means (3) to confirm the state.

3. System according to Claim 1 or 2, **characterized in that** the determination means (6) are suitable for maintaining information on the non-initiated state of the catalyst-forming means (3) for a second predetermined time period, after the operating point of the latter has crossed the corresponding non-initiated/initiated transition curve (C1).

4. System according to Claim 2 or 3, **characterized in that** the time periods and the hysteresis variations can be calibrated.

5. System according to any one of the preceding claims, **characterized in that** the minimum value is equal to 0.

6. System according to any one of the preceding claims, **characterized in that** the common-rail injection means (5) are suitable for triggering several post-injections of fuel and **in that** the amount of fuel injected during each post-injection when the catalyst-forming means (3) are in an initiated state is controlled independently of that of the other post-injection.

7. System according to any one of the preceding claims, **characterized in that** the engine is associated with a turbocharger.

8. System according to any one of the preceding claims, **characterized in that** the pollution control means (4) comprise a particulate filter.

9. System according to any one of the preceding claims, **characterized in that** the pollution control means (4) comprise an NOₓ trap.

10. System according to any one of the preceding claims, **characterized in that** the fuel comprises an additive intended to be deposited with the particles with which it is mixed, onto the pollution control means (4) to facilitate their regeneration.

11. System according to any one of Claims 1 to 9, **characterized in that** the fuel comprises an additive that forms an NOₓ trap.

## Patentansprüche

1. System zur Unterstützung der Regeneration von einen Oxidationskatalysator (3) bildenden Mitteln zugeordneten Entgiftungsmitteln (4), die in einer Abgasleitung (2) eines Dieselmotors (1) eines Kraftfahrzeugs integriert sind, und wobei der Motor (1) gemeinsamen Einspritzleitungsmitteln (5) zur Versorgung seiner Zylinder mit Kraftstoff zugeordnet sind, die dazu ausgeführt sind, eine Regenerationsstrategie bei konstantem Drehmoment durch Kraftstoffeinspritzung in die Zylinder des Motors in mindestens einer Nacheinspritzung zu implementieren, **dadurch gekennzeichnet, dass** es Mittel (7, 8, 9) zur Erfassung einer Phase, in der der Fuß vom Gaspedal des Fahrzeugs angehoben ist, und/oder einer Leerlaufphase des Fahrzeugmotors sowie Mittel (6) zur Analyse des Aktivierungszustands der Katalysatorbildungsmittel (3) aufweist, um die gemeinsamen Einspritzleitungsmittel (5) zur Kraftstoffversorgung zu steuern und so die bei der oder bei jeder Nacheinspritzung eingespritzte Kraftstoffmenge als Funktion des Aktivierungszustands der Katalysatorbildungsmittel (3) einzustellen,
dass die Mittel (6) zur Analyse des Aktivierungszustands der Katalysatorbildungsmittel (3) stromaufwärts und stromabwärts davon mit Temperaturfühlern (10, 11) verbunden sind, um einen Betriebspunkt dieser Katalysatorbildungsmittel zu bestimmen, und Mittel (6) zur Bestimmung ihres Aktivierungszustands anhand dieses Betriebspunkts umfassen,
dass die Mittel (6) zur Bestimmung des Aktivierungszustands der Katalysatorbildungsmittel (3) dazu ausgeführt sind, den Betriebspunkt dieser Mittel mit zwei vorbestimmten Aktivierungszustandsübergangskurven (C1, C2) zu vergleichen, die Bereiche für einen nicht aktivieren Zustand, einen aktivierten Zustand und einen aktivierten Zustand ohne Deaktivierungsgefahr der Katalysatorbildungsmittel (3) und zum Validieren eines Zustands nach einer ersten vorbestimmten Zeitdauer zur Bestätigung, dass sich die Katalysatorbildungsmittel in diesem Zustand befinden; und
dass die gemeinsamen Einspritzleitungsmittel (5) dazu ausgeführt sind, wenn sich die Katalysatorbildungsmittel (3) in einem aktivierten Zustand ohne Deaktivierungsgefahr befinden, bei der oder jeder Nacheinspritzung eine Nennkraftstoffmenge einzuspritzen, die gemeinsamen Einspritzleitungsmittel (5) dazu ausgeführt sind, wenn sich die Katalysatorbildungsmittel (3) in einem aktivierten Zustand befinden, die bei der oder jeder Nacheinspritzung eingespritzte Kraftstoffmenge gemäß einem Multiplikationsfaktor als Funktion der Abweichung zwischen dem Betriebspunkt dieser Katalysatorbildungsmittel (3) und der entsprechenden Übergangskurve zwischen einem aktivierten Zustand und einem nicht aktivierten Zustand (C1) zu verringern, und die gemeinsamen Einspritzleitungsmittel (5) dazu ausgeführt sind, wenn sich die Katalysatorbildungsmittel (3) in einem nicht aktivierten Zustand befinden, die bei der oder jeder Nacheinspritzung eingespritzte Kraftstoffmenge auf einem vorbestimmten Minimalwert zu begrenzen.

2. System nach Anspruch 1, **dadurch gekennzeichnet, dass** die verschiedenen Hystereseabweichungen gemäß der Richtung der Übergänge der Katalysatorbildungsmittel (3) von einem Zustand in einen anderen zur Bestätigung des Zustands verwendet werden.

3. System nach Anspruch 2 oder 3, **dadurch gekennzeichnet, dass** die Bestimmungsmittel (6) dazu ausgeführt sind, Informationen, dass sich die Katalysatorbildungsmittel (3) in einem nicht aktivierten Zustand befinden, während einer zweiten vorbestimmten Zeitdauer nachdem ihr Betriebspunkt die entsprechende Übergangskurve nicht aktiviert - aktiviert (C1) überquert hat, zu bewahren.

4. System nach Anspruch 2 oder 3, **dadurch gekennzeichnet, dass** die Zeitdauern und Hystereseabweichungen kalibrierbar sind.

5. System nach einem der vorhergehenden Ansprüche, **dadurch gekennzeichnet, dass** der Minimalwert gleich 0 ist.

6. System nach einem der vorhergehenden Ansprüche, **dadurch gekennzeichnet, dass** die gemeinsamen Einspritzleitungsversorgungsmittel (5) dazu ausgeführt sind, mehrere Kraftstoffnacheinspritzungen auszulösen, und dass die Kraftstoffmenge, die bei jeder Nacheinspritzung eingespritzt wird, wenn sich die Katalysatorbildungsmittel (3) in einem aktivierten Zustand befinden, unabhängig von der der anderen Nacheinspritzung eingestellt wird.

7. System nach einem der vorhergehenden Ansprüche, **dadurch gekennzeichnet, dass** die Entgiftungsmittel (4) einen Teilchenfilter umfassen.

8. System nach einem der vorhergehenden Ansprüche, **dadurch gekennzeichnet, dass** die Entgiftungsmittel (4) eine NOx-Falle umfassen.

9. System nach einem der vorhergehenden Ansprüche, **dadurch gekennzeichnet, dass** die Entgiftungsmittel (4) eine NOx-Falle umfassen.

10. System nach einem der vorhergehenden Ansprüche, **dadurch gekennzeichnet, dass** der Kraftstoff ein Additiv enthält, das sich mit den Teilchen, mit denen es vermischt wird, auf die Entgiftungsmittel (4) absetzen soll, um ihre Regeneration zu erleichtern.

11. System nach einem der Ansprüche 1 bis 9, **dadurch gekennzeichnet, dass** der Kraftstoff ein eine NOx-Falle bildendes Additiv enthält.
